# EUROPEAN PATENT APPLICATION

(11) **EP 4 779 544 A1**
(43) Date of publication of application: **22.07.2026**
(21) Application number: 26153060.4
(22) Date of filing: 20.01.2026
(51) Int. Cl.: G06Q 10/101, G06F 40/169, H04L 12/18

(54) **METHOD AND SYSTEM FOR EFFICIENT CONTENT UPDATES IN REAL-TIME CONFERENCES**

(30) Priority: 21.01.2025 US 202519033414
(71) Applicant: Mitel Networks Corporation, Ottawa, Ontario K2K 3K1 (CA)
(72) Inventor: Tsiatsikas, Zisis, Thessaloniki (GR); Tsokana, Sofia, Kanata (CA)
(74) Representative: McDougall, James

(57) **Abstract**

The present invention relates to a method and a system for efficient content updates in real-time conferences. The proposed approach utilizes advanced generative AI and natural language processing (NLP) to continuously analyze and integrate annotations during the presentation. The inventive method and system are able to classify and summarize feedback, group similar annotations, and update the presentation content in real-time. This includes creating new content when necessary and adjusting existing content to reflect audience input. The integration is done contextually, ensuring that updates are relevant and maintain the presentation's flow.

## Description

### FIELD OF DISCLOSURE

The present invention relates to generally relates to electronic communication methods and systems. More particularly, the invention relates to a method and a system for efficient content updates in real-time conferences.

### BACKGROUND OF THE DISCLOSURE

One drawback in state-of-the-art real-time conference systems and methods is that these cannot seamlessly integrate audience feedback and questions into a live presentation while the flow remains intact. Traditional approaches of handling real-time interactions often result in disorganized flow and disruptions for the presenter. This can lead to lack of engagement and force presenters to accept questions after the presentation has concluded, which can undermine its value.

The existing tools, like office power point etc., offer a way to collaborate on a document in the cloud so that many users can edit the content online. In a real-time meeting this is not usually the case as the presenter is occupied with the presentation and the participants do not have the right to edit the content presented.

Moreover, usually in online presentations, if there are comments or questions, or if other complementary topics arise, those are resolved offline and the presentation content is edited and enhanced afterwards, offline.

Traditional document revision systems focus on consolidating edits from multiple reviewers into a single, static document version after review. Conventional systems often merge revisions into a single document post-facto, which may not capture the fluid nature of live interactions. Such revisions are often done with help from generative Artificial Intelligence.

Generative artificial intelligence (generative Al, GenAl, or GAI) is a subset of artificial intelligence that uses generative models to produce text, images, videos, or other forms of data. These models learn the underlying patterns and structures of their training data and use them to produce new data based on the input, which often comes in the form of natural language prompts.

However, all systems from the state of the art lack real-time content editing, so that there is a need to enhance the above-mentioned process by editing the presentation content online during the presentation.

### SUMMARY OF THE DISCLOSURE

Examples of the disclosure provide advanced generative AI and natural language processing (NLP) to continuously analyze and integrate annotations during the presentation. With the inventive method and system, it is possible to classify and summarize feedback, group similar annotations, and update the presentation content in real-time. This includes creating new content when necessary and adjusting existing content to reflect audience input. The integration is done contextually, ensuring that updates are relevant and maintain the presentation's flow.

Examples of the present invention are based on the object of providing a method and a corresponding system for efficient content updates in real-time conferences. Another aspect of the invention is to further optimize the method and the system in a fast and resource-efficient way.

This object is solved by an exemplary methods and systems having the features described herein.

According to the examples of the disclosure, a method for efficient content updates in real-time conferences is provided, the method comprising the steps of:
- starting, by a presenter or one or more participants from one or more user end devices, a real-time conference session on a conference tool;
- adding, by the one or more participants, one or more annotations regarding content presented in the real-time conference session;
- aggregating, by a generative AI module, one or more added annotations regarding content presented in the real-time conference session according to a similar context;
- analyzing, by the generative AI module or the conference tool, the content presented in the real-time conference session if a semantic match indicating a similar context with the added one or more annotation is present;
- editing, by the generative AI module, the existing content of the real-time conference session in case a similar context is present;
- sending, by the conference system, a notification to the presenter and the one or more participants who added the annotation with the edited context of the real-time conference session;
- verifying, by the presenter and the one or more participants who added the annotation, in a consensus decision in case the edited context of the real-time conference session covers the annotated parts;
- prompting, by the conference tool, the presenter with a message and/or a sound to verbally connect the content they are describing with the edited content in the case a monitoring of the presenter's voice revealing that a semantic similarity in content which matches with the edited content is detected.

For the purposes of the invention, content presented in the real-time conference session means any form of content, e.g. a presentation with various slides, or a pure text document, etc.

For the purposes of the invention, a conference tool describes everything that is necessary for the preparation, follow-up and conduct of a conference. In particular, the conference tool includes information and communications technology (ICT) which is an extensional term for information technology (IT) that stresses the role of unified communications and the integration of telecommunications (telephone lines and wireless signals) and computers, as well as necessary enterprise software, middleware, storage and audiovisual, that enable users to access, store, transmit, understand and manipulate information. ICT is also used to refer to the convergence of audiovisuals and telephone networks with computer networks through a single cabling or link system. There are large economic incentives to merge the telephone networks with the computer network system using a single unified system of cabling, signal distribution, and management. ICT and also conference tool include any communication device, encompassing radio, television, cell phones, computer and network hardware, satellite systems and so on, as well as the various services and appliances with them such as video conferencing and distance learning.

In the sense of the invention, an annotation is extra information associated with a particular point in a document or other piece of information. For example, it can be a note that comprises a comment or explanation. However, annotations can also be divided into different subclasses, such as LIDAR annotation, image annotation, text annotation, video annotation, audio annotation, etc.

In the context of the invention, a semantic match or semantic matching is a technique used in computer science to identify information that is semantically related. For example, given any two graph-like structures, e.g. classifications, taxonomies database or XML schemas and ontologies, matching is an operator which identifies those nodes in the two structures which semantically correspond to one another. For example, applied to file systems, it can identify that a folder labeled "car" is semantically equivalent to another folder "automobile" because they are synonyms in English. This information can be taken from a linguistic resource like WordNet or other.

The content or the presentation is enhanced in a real-time fashion, while the meeting flows, by editing the presentation slides according to the annotations' context. The generative Al module analyzes the annotations and finds the best fit for the new content in the existing content which can be for example the slides of a presentation or a page, paragraph, sentence of a text etc. If there is no relevant content, new content is created in the presentation document, either before or after the point that the presenter has reached. After that, the presenter is informed of the new additions and gets a hint in the form of text or sound in order to orally cover the new parts when the presenter reaches the specific point in the presentation document. Lastly, the presenter solely decides if the content can fit or not in the active discussion. To assist even more with the process, the Al assistant can whisper a few bits to the presenter, taking into account the words spoken by the presenter at this specific moment and/or the content that was edited in the presentation. Everything runs during the meeting, thus improving the overall editing process. Only in case annotations are present which are not approved by the presenter and/or the participants, a decision on these will be made after the meeting.

This approach relies on the condensing mechanism using generative AI. That is, the annotations semantical context is preserved, but in addition the generative AI convert a lengthy text to its equivalent shortened version, and the same holds true for any media uploaded by the participants in the annotation (i.e., video, audio, text). Essentially, the processing overhead is optimized by mapping heavy media content to semantically equivalent data bits that can be processed easier by leveraging on Al technologies.

In this respect the proposed solution concerns the conversion of video to audio, video to text, or audio to text using Al technologies. In all of the previously mentioned cases and combinations, the benefit is important, especially when one concerns the processing overhead over obfuscated annotations (i.e., hashed, encrypted etc.). The latter example concerns the comparison of the private obfuscated annotations. The technical benefit in this case concerns the fact that the information representation of each annotation is reduced in a way that results in lightweight CPU operations, due to the encryption/decryption of smaller in size chunks (i.e., text) of information. That is, for example a video annotation is transformed in the equivalent text form that holds the semantic representation and simplifies the encryption/decryption processes when it comes to the correlation functionality.

This solution combines similar annotations using generative AI and offers an updated presentation that covers all the comments/questions raised by the one or more participants.

According to a preferred embodiment, if the analysis reveals that no semantic match indicating a similar context with the added one or more annotation is present in the content of the real-time conference session, the method further comprises creating, by the generative AI module, new content that covers the added one or more annotations before the step of editing the content of the real-time conference session.

According to another preferred embodiment, before the step of verifying, in case the edited context of the real-time conference session does not cover the annotated parts, the method is repeated at the step of analyzing, by a generative AI module, the content presented in the real-time conference session if a semantic match indicating a similar context with the added one or more annotation is present.

According to still another preferred embodiment, the one or more annotations and/or the content presented comprise(s) text, video, image, drawing, audio, marking, 3D-models data, computer aided design, CAD, data, virtual reality, VR objects, augmented reality, AR, objects, tabular data, time-series data, geospatial data, sensor data and/or light imaging, detection and ranging, LIDAR, data.

Further, according to a preferred embodiment, before the step of aggregating the one or more annotations, the method further comprises classifying, by a Natural Language Processing, NLP, module, the one or more annotations into groups with similar semantic context. Natural language processing (NLP) is a subfield of computer science and especially artificial intelligence. It is primarily concerned with providing computers with the ability to process data encoded in natural language and is thus closely related to information retrieval, knowledge representation and computational linguistics, a subfield of linguistics. Typically, data is collected in text corpora, using either rule-based, statistical or neural-based approaches in machine learning and deep learning. Major tasks in natural language processing are speech recognition, text classification, natural-language understanding, and natural-language generation.

According to yet another preferred embodiment, the classification in groups is performed if the similarity exceeds 55 - 69% similarity, preferably exceeds 70 - 89% similarity and, most preferred, exceeds 90% similarity.

According to yet another preferred embodiment, the NLP module is implemented on one or more of the user end devices and/or is implemented on the conference tool or a server.

According to yet another preferred embodiment, after the step of classifying the one or more annotations, the method further comprises:
- synthesizing, by the generative Al module, the classified one or more annotations into contextual summaries, wherein the synthesizing is done in an iterative manner; and
- analyzing, by the generative AI module, the contextual summaries by comparing these with the content presented in the real-time conference session if a semantic match indicating similar context with the contextual summaries is present.

According to yet another preferred embodiment, the method further comprises creating, by the generative Al module or the conference tool, a list of the analyzed results on the basis of similarity priorities.

According to yet another preferred embodiment, the method further comprises refining, by the generative AI module, the analyzed results on the basis of similarity priorities starting from the most similar, wherein the refinement is performed in an iterative manner.

According to yet another preferred embodiment, the iterative refinement is performed with a limit of 5 to 7 calls, preferably with a limit of 2 to 4 calls, and most preferred with a limit of 1 call. The term 'calls' here of course refers to the number of times the generative Al module is called to perform one or more specific activities.

According to additional examples of the invention, a system is provided, wherein the system is configured to perform the method according to any one of the above-mentioned embodiments.

According to a preferred embodiment, the system comprises an internal generative Al module and/or an external generative AI module, wherein the internal generative Al module is part of the conference tool or of a conference server and/or wherein the external generative Al module is cloud based or is a software as a service, SaaS, application.

According to another preferred embodiment, the system further comprises an internal or an external Natural Language Processing, NLP, module, wherein the internal NLP module is implemented in a conference tool or server and/or is implemented on one or more user endpoints or clients and/or wherein the external NLP module is cloud based or is a software as a service, SaaS, application.

It must also be noted that aspects of the invention have been described with reference to different subject matters. In particular, some aspects or embodiments have been described with reference to apparatus type claims, whereas other aspects have been described with reference to method type claims. However, a person skilled in the art will gather from the above and the following description that, unless otherwise notified, in addition to any combination between features belonging to one type of subject-matter, also any combination between features relating to different types of subject-matters is considered to be disclosed with this text. In particular, combinations between features relating to the apparatus type claims and features relating to the method type claims are considered to be disclosed. In addition, features relating to one of the embodiments may be combined with other features of another embodiment, the drawings or the claims, where possible. The invention and embodiments thereof will be described below in further detail in connection with the drawing(s).

### BRIEF DESCRIPTION OF THE DRAWING FIGURES

A more complete understanding of exemplary embodiments of the present disclosure can be derived by referring to the detailed description and claims when considered in connection with the following illustrative figures.
Fig. 1 shows a flowchart of method steps according to an embodiment of the invention.
Fig. 2 shows another flowchart of a workflow for optimizing annotation processing of the method according to another embodiment of the invention.

It will be appreciated that elements in the figures are illustrated for simplicity and clarity and have not necessarily been drawn to scale. For example, the dimensions of some of the elements in the figures may be exaggerated relative to other elements to help improve understanding of illustrated embodiments of the present disclosure.

### DETAILED DESCRIPTION OF EXEMPLARY EMBODIMENTS

Although certain embodiments and examples are disclosed below, it will be understood by those in the art that the invention extends beyond the specifically disclosed embodiments and/or uses of the invention and obvious modifications and equivalents thereof. Thus, it is intended that the scope of the invention disclosed should not be limited by the particular disclosed embodiments described below.

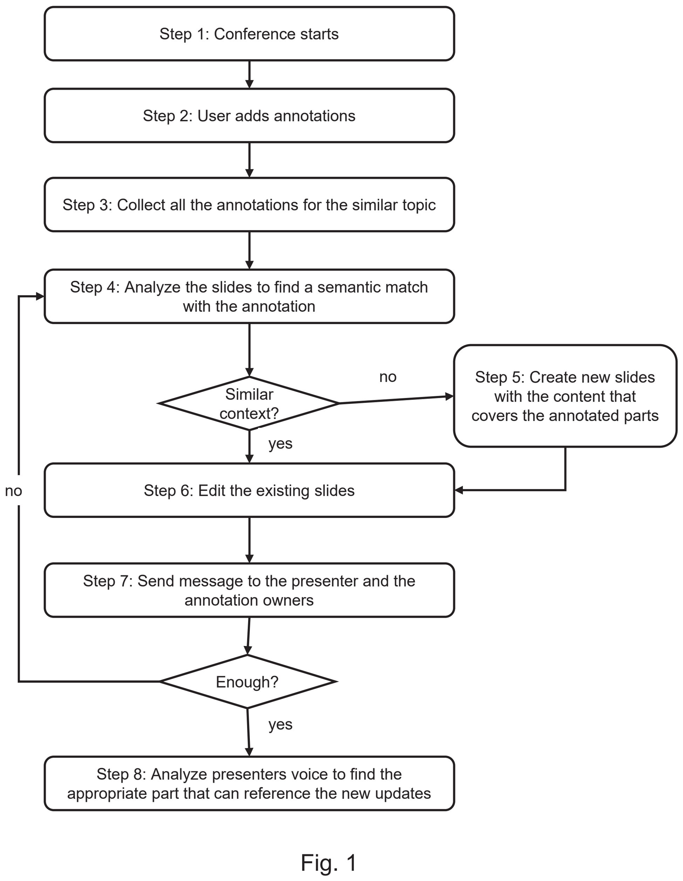

Fig. 1 shows a flowchart of method steps according to an embodiment of the invention. A real-time conference is started at the beginning. This can be done, for example, by a moderator, a presenter or one of the participants or users of the conference.

The basic idea of this solution concerns a dual-layered annotation system that supports both private and public interactions. Viewers can publicly or privately "mark" specific points in the presentation, attaching questions or comments in various formats, such as text, audio, video, etc. (Step 2 of Fig.1).

The solution involves a multi-step process that begins with the collection or aggregation of annotations from users during the presentation (see Fig 1, Step 3).

The annotations are then analyzed in real-time by a generative AI module to identify similar contexts or topics, enabling the system to group related comments and suggestions (Step 3 of Fig.1).

The proposed method monitors a conference that is active, and the relevant annotations added by the users during the real-time meeting. After collecting similar annotations for the same topic, in Step 4 of the above-mentioned flow diagram the generative Al module analyzes the grouped annotations. Keep in mind that the gathering is done based on the position that the user is putting the annotation. That is, if two or more users add annotations in the same word/sentence/paragraph/slide, this is a trigger for grouping.

Other cases are possible as well; if, for example, the presenter is not screen sharing a presentation but an image, or an excel sheet, the decisions should be taken accordingly taking into account certain factors. Another remark concerns the grouping of different types of annotations. In this case, the different types should be compared as described earlier.

In Step 6, if the annotations analysis resulted in a semantic match with certain content in the presentation, then this specific content will be updated. The generative AI module will offer an updated version that incorporates the grouped annotations to the existing presented text.

However, if the annotations do not match the existing content, then the generative Al module optionally creates new content, e.g. slides, by following the existing templates, and incorporates the new content, e.g. slides, before or after the content, e.g. slides, which were annotated (see Step 5 of Fig. 1).

After the updates (Step 6) the system sends in Step 7 a message or a sound to the presenter and the annotation creators (see Fig. 1, Step 7). The different stakeholders optionally review the content and make a consensus decision if this covers the annotated parts or if the analysis should be extended (in Fig.1 marked as "enough?"). Only in the case a consensus decision cannot be made during the meeting, the decision about the content is then postponed after the conference has ended.

This method, in its final step (Step 8), involves continuously monitoring by the generative AI module the presenter's voice to detect when it matches the updated context. If a match is found, a message or notification is sent to the presenter, prompting him/her to verbally connect the parts he/she is describing with the updated content or slides.

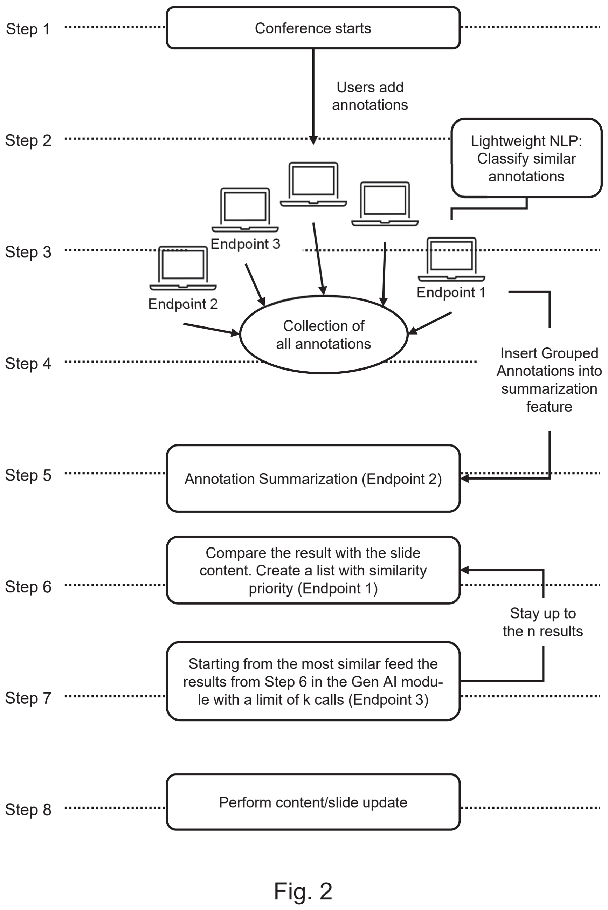

Depicted in Fig. 2 is a workflow for optimizing annotation processing during live meetings of the method. As can be derived from Fig. 1, during live meetings there is a need to consume user annotations and edit presentation content in real-time. The use of Gen AI is critical for this task, as it helps to extract the annotations, process them and generate a result that will be integrated in the presentation. Due to the increased cost of GenAI cloud vendors, it would be desirable to offload the relevant tasks locally on the edge devices or endpoints.

In a typical online meeting, the users already consume a portion of their resources for the communication tools. For example, in Microsoft Teams in a single call with 2 endpoints using the screen sharing feature and camera, one would need around 1.5 GB of RAM. Thus, by offloading the Al tasks to the end-user it is further needed to optimize the way that the GenAl features are consumed on the client side (end-user side), so that the resource utilization on the edge is improved.

Taking all the above into account, the question is how to reduce the number of calls for the AI modules and their resource footprint in the client?

If the GenAI is considered as a single API that is used in the present application, there are two types of calls that can be optimized:

The internal steps that are required by the GenAl module to analyze the input data can be reduced. Those steps are dynamic and not fixed in size. In models like GPT which make use of neuron layers, the structural representation of the input data is of crucial importance. If the input data are complex, and semantically irrelevant, the need for resources is increased because the model needs to re-evaluate the relations and the weights between the different words so that it can understand the context and generate meaningful results.

The number of calls on the application layer can be reduced. This can be done if the GenAI module returns meaningful results without the need to refine the output with multiple calls. If this is achieved, it also reduces the resources that the system would require to use the AI module (i.e., cost, memory, CPU, etc.).

To solve these problems, the method shown in Fig. 1 is also used in Fig. 2. In Fig. 2 a workflow for optimizing annotation processing during live meetings is shown. Initially, annotations from users across endpoints are collected and categorized into semantically similar groups (see Step 3 with classification in Fig. 2). This pre-classification of annotations is done with a lightweight NLP engine deployed on an edge device. The categorization ensures efficient processing by reducing redundancy and grouping related inputs. This classification step helps to organize the inputs before they are passed to the generative AI module, minimizing resource usage and improving system scalability.

Instead of feeding all annotations directly into a generative AI model, the system first processes annotations through a classification layer to group similar or semantically related inputs. The annotations are classified in categories that exceed k% of similarity in their semantic representation, wherein k can be for example 55 - 69%, preferably 70 - 89% or 90% and higher. As mentioned above, this step is achieved with a lightweight NLP engine that runs fully on clients (endpoints), thereby, for example, using the transformers.js library. For this reason, this first task is assigned in one of the endpoints that submit an annotation. The selection is done by looking if an endpoint has already loaded the NLP models, otherwise another endpoint is picked randomly by the system which fulfills this criterion.

Once the annotations are grouped, the Gen Al module refines these grouped inputs iteratively.

Therefore, after the classification step that produced n results, one of each classified category, only two basic iterations/calls on the Gen AI engine are needed.

Iteration 1: In the first iteration the grouped results per class are fed in the Gen AI module so that the best possibly refined result from the Gen AI engine is got. This will give refined results for each class based on existing and new content. On step 5, the categorized annotations are transmitted to the central system where Gen AI begins synthesizing these inputs into contextual summaries.

Iteration 2: In the second iteration the Gen Al engine is fed with the results from Iteration 1. These summaries from step 5 are reviewed and validated to ensure accuracy and relevance. Therefore, in step 6 these summaries are compared with the content of the presentation. And a list with descending similarity priorities may be created. The next step involves the further refinement of the output (step 7). Here, starting from the most similar, the results of step 6 are fed in the Gen Al module with a limit of x calls. The iterative refinement is performed with a limit of x calls for example 5 to 7 calls, preferably with a limit of 2 to 4 calls, and most preferred with a limit of 1 call.

This process is repetitive and between the two iterations (1 and 2) the NLP classification algorithm can be applied many times, so that in each round the entropy (uncertainty) of the inputs that are given in the Gen Al module is reduced.

Lastly (Step 8) all these refinements are incorporated into the presentation material from the conference and the presenter is notified as described under Fig. 1.

With this approach a more structured content as input for the generative AI is achieved, which results in less resources used by the generative AI module. Further, less iterations for the generative Al occur, compared to the standard approach to give everything as input to the generative AI, i.e., the neurons do not require many iterations to understand the relation between the words and the context. Instead, the content is already semantically coherent, thus reducing the cycles of the generative Al module.

In principle, the proposed method reduces the likelihood of noisy or generalized outputs and minimizes iterative requests to achieve consensus. The use of lightweight NLP models on the client-side ensures that the processing of annotations remains fast and resource-efficient. The result is a more scalable and cost-effective solution than minimizes cloud resource utilization while maintaining the responsiveness and accuracy necessary for live annotations and slide editing.

The proposed approaches, however, utilize advanced generative AI and natural language processing (NLP) to continuously analyze and integrate annotations during the presentation. The Al system classifies and summarizes feedback, groups similar annotations, and updates the presentation content in real-time. This includes creating new slides when necessary and adjusting existing content to reflect audience input. The integration is done contextually, ensuring that updates are relevant and maintain the presentation's flow. Additionally, the system employs real-time feedback mechanisms, such as AI-driven prompts to the presenter, to facilitate seamless incorporation of new information. This approach does not only enhance interactivity but also improves the relevance and accuracy of the presentation updates, ensuring that audience questions and suggestions are addressed promptly and effectively.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

The example embodiments of the disclosure described above do not limit the scope of the invention, since these embodiments are merely examples of the embodiments of the invention. Any equivalent embodiments are intended to be within the scope of this invention. Indeed, various modifications of the disclosure, in addition to those shown and described herein, such as alternative useful combinations of the elements described, may become apparent to those skilled in the art from the description. Such modifications and embodiments are also intended to fall within the scope of the appended claims.

## Claims

1. A method for efficient content updates in real-time conferences, wherein the method comprises the steps of:
- starting, by a presenter or one or more participants, from one or more user end device a real-time conference session on a conference tool;
- adding, by the one or more participants, one or more annotations regarding content presented in the real-time conference session;
- aggregating, by a generative Al module, one or more added annotations regarding content presented in the real-time conference session according to similar context;
- analyzing, by the generative Al module or the conference tool, the content presented in the real-time conference session if a semantic match indicating a similar context with the added one or more annotation is present;
- editing, by the generative Al module, the existing content of the real-time conference session in case a similar context is present;
- sending, by the conference system, a notification to the presenter and the one or more participant who added the annotation with the edited context of the real-time conference session;
- verifying, by the presenter and the one or more participants who added the annotation in a consensus decision in case the edited context of the real-time conference session covers the annotated parts;
- prompting, by the conference tool, the presenter with a message and/or sound to verbally connect the content they are describing with the edited content in the case a monitoring of the presenter's voice revealing that a semantic similarity in content which matches with the edited content is detected.

2. The method according to claim 1, wherein, if the analysis reveals that no semantic match indicating a similar context with the added one or more annotations is present in the content of the real-time conference session, the method further comprises:
- creating, by the generative AI module new content that covers the added one or more annotations before the step of editing the content of the real-time conference session.

3. The method according to claim 1 or claim 2, wherein before the step of verifying, in case the edited context of the real-time conference session does not cover the annotated parts, the method is repeated at the step of analyzing, by a generative Al module, the content presented in the real-time conference session if a semantic match indicating a similar context with the added one or more annotations is present.

4. The method according to any preceding claim, wherein the one or more annotations and/or the content presented comprises text, video, image, drawing, audio, marking, 3D-models data, computer aided design, CAD, data, virtual reality, VR objects, augmented reality, AR, objects, tabular data, time-series data, geospatial data, sensor data and/or light imaging, detection and/or ranging, LIDAR, data.

5. The method according to any preceding claim, wherein before the step of aggregation the one or more annotations, the method further comprises:
- classifying, by a Natural Language Processing, NLP, module, the one or more annotations into groups with similar semantic context.

6. The method according to claim 5, wherein the classification in groups is performed if the similarity exceeds 55 - 69% similarity.

7. The method according to claim 5 or claim 6, wherein the NLP module is implemented on one or more of the user end-devices and/or is implemented on the conference tool or a server.

8. The method according to any of claims 5 to 7, wherein after the step of classifying the one or more annotation, the method further comprises:
synthesizing, by the generative AI module the classified one or more annotations into contextual summaries, wherein the synthesizing is done in an iterative manner; and
analyzing, by the generative AI module, the contextual summaries by comparing these with the content presented in the real-time conference session if a semantic match indicating similar context with the contextual summaries is present.

9. The method according to any preceding claim, wherein the method further comprises:
- creating, by the generative Al module or the conference tool, a list of the analyzed results on the basis of similarity priorities.

10. The method according to claim 9, wherein the method further comprises:
- refining, by the generative AI module, the analyzed results on the basis of similarity priorities starting from the most similar, wherein the refinement is performed in an iterative manner.

11. The method according to claim 10, wherein the iterative refinement is performed with a limit of 5 to 7 calls.

12. A system for efficient content updates in real-time conferences, wherein the system is configured to perform the method according to any preceding claim.

13. The system according to claim 12, wherein the system comprises an internal generative Al module and/or an external generative AI module, wherein the internal generative Al module is part of the conference tool or of a conference server and/or wherein the external generative AI module is cloud based or is a software as a service, SaaS, application.

14. The system according to claim 12 or claim 13, wherein the system further comprises an internal or an external Natural Language Processing, NLP, module, wherein the internal NLP module is implemented in a conference tool or server and/or is implemented on one or more user endpoints or clients and/or wherein the external NLP module is cloud based or is a software as a service, SaaS, application.
